Europäisches Patentamt

European Patent Office

Office européen des brevets

(11) Veröffentlichungsnummer: **0 020 864**
**B1**

(12) **EUROPÄISCHE PATENTSCHRIFT**

(45) Veröffentlichungstag der Patentschrift: **22.06.83**

(21) Anmeldenummer: **80101407.7**

(22) Anmeldetag: **18.03.80**

(51) Int. Cl.³: **B 23 Q 3/14,** B 23 B 31/40, B 23 F 23/12

(54) Werkzeugaufnahme, insbesondere für das Werkzeug einer Wälzfräsmaschine.

(30) Priorität: **07.06.79 DE 7916368 U**

(43) Veröffentlichungstag der Anmeldung:
**07.01.81 Patentblatt 81/1**

(45) Bekanntmachung des Hinweises auf die Patenterteilung:
**22.06.83 Patentblatt 83/25**

(84) Benannte Vertragsstaaten:
**DE FR GB IT**

(56) Entgegenhaltungen:
CH - A - 4 12 519
DE - A - 1 800 769
DE - U - 7 616 406
DE - U - 66 017 67
US - A - 2 577 042
US - A - 2 841 929
US - A - 3 242 818
US - A - 3 249 015

(73) Patentinhaber: **Carl Hurth Maschinen- und Zahnradfabrik GmbH & Co**
**Moosacher Strasse 36**
**D-8000 München 40 (DE)**

(72) Erfinder: **Öfner, Karl**
**Hofheimerstrasse 13**
**D-8000 München 60 (DE)**
Erfinder: **Salzinger, Ludwig**
**Erich-Kästner-Strasse 14**
**D-8000 München 40 (DE)**

Courier Press, Leamington Spa, England.

Werkzeugaufnahme, insbesondere für das Werkzeug einer Wälzfräsmaschine

Die Erfindung bezieht sich auf eine Werkzeugaufnahme, insbesondere für das Werkzeug (Fräser) einer Wälzfräsmaschine, mit einem Spanndorn, der an beiden Enden jeweils zum Zentrieren und Spannen in der Werkzeugmaschinenspindel und in einem Stützlager in geeigneter Weise ausgebildet, z.B. mit Konen versehen, ist, und der zum axialen Spannen des Werkzeugs einen Bund auf der einen Seite des Werkzeugs und eine Spannmutter auf der anderen Seite des Werkzeugs aufweist.

Es ist üblich, Werkstücke oder Werkzeuge auf einem Spanndorn aufzunehmen und mit einer Mutter gegen einen Bund od. dgl. zu ziehen und zu spannen. Auf diese Weise werden beispielsweise Abwälzfräser gespannt. Da die Gewinde solcher Dorne nie ganz genau laufen, die Muttern im allgemeinen nicht genau plan sind und die Gewinde von Dorn und Mutter immer Spiel aufweisen, so daß sich die Mutter beim Anziehen im Maße dieses Spiels radial verschieben und dadurch verkanten kann, wird auf das zu spannende Stück, beispielsweise auf den Abwälzfräser, ein einseitiger Druck ausgeübt, der zu einem Radialschlag oder Rundlauffehler des Fräsers führt. Je nachdem, welche Passung zwischen dem Dorn und dem Fräser vorhanden ist, kann dieser Schlag bis zu 0,02 mm und mehr betragen. Er kann aber auch bei einem ohne Spiel auf dem Dorn sitzenden Fräser vorhanden sein, da die Fasern des Dornes durch den einseitigen Druck ungleich gedehnt werden, so daß der Dorn krummgezogen wird.

Zur Verringerung des Schlages sind schon verschiedene Einrichtungen vorgeschlagen worden. Nach dem US-Patent 3 249 015 weist die Mutter auf einem Lochkreis Gewindebohrungen mit Schrauben auf, von denen je nach Lage und Größe des Radialschlages wenigstens eine mehr oder weniger stark angezogen und gegen den Fräser gedrückt wird. Dabei wird der Dorn einseitig gedehnt, so daß der Schlag weitgehend beseitigt werden kann.

Vom deutschen Gebrauchsmuster 76 16 406 ist es bekannt, eine Spannmutter zu verwenden, die auf der dem Werkzeug zugewendeten Seite einen axial aus der Mutter herausragenden Ringkolben aufweist, der einen eine Flüssigkeit oder plastische Masse enthaltenden Zylinderraum verschließt. Das Volumen des Zylinderraumes ist von außen veränderbar, so daß der Ringkolben unabhängig von der nur lose anzuziehenden Mutter gegen das Werkzeug gepreßt werden kann, wo er mit seiner ganzen Ringfläche anliegt. Ein Verspannen des Werkzeugs ist damit weitgehend, aber nicht völlig ausgeschlossen.

Es ist auch schon vorgeschlagen worden (Deutsches Gebrauchsmuster 6 601 767), zwischen dem Werkzeug und dem Bund od. dgl. und/oder zwischen dem Werkzeug und der Mutter auf dem Spanndorn ringförmige Halteelemente mit L-förmigem Querschnitt anzubringen, die mit ihrer einen, ebenen Stirnfläche am Werkzeug anliegen und auf deren gegenüberliegendem Ansatz ein durch Schrauben radial verstellbarer Ring angeordnet ist, der sich mit seiner einen, ebenen Stirnfläche am Bund oder an der Mutter und mit seiner anderen, als balliger Außenkegel geformten Stirnfläche an der anderen, hohlkegelig geformten Stirnfläche des Halteelementes abstützt. Da der radial verstellbare Ring zwischen dem Halteelement und dem Bund od. dgl. und/oder der Mutter angeordnet ist und die Schrauben mit dem Halteelement zusammenwirken, kann mit dieser Einrichtung zwar dem radialen Verschieben der Mutter und in geringem Maße einer Durchbiegung des Spanndornes entgegengewirkt werden, ein Ausrichten des Werkzeugs gegenüber dem Spanndorn ist dagegen nicht möglich.

In vielen Fällen ist es erforderlich, die Rundlaufgenauigkeit noch weiter zu erhöhen als dies mit den bekannten Einrichtungen möglich ist.

Der Erfindung liegt als Aufgabe eine Vorrichtung zum schlagfreien Aufnehmen des Werkzeugs, insbesondere eines Abwälzfräsers einer Zahnrad-Wälzfräsmaschine, zugrunde. Diese Aufgabe wird mit dem kennzeichnenden Merkmal des Anspruchs 1 gelöst. In der einfachsten Ausführung kann der Ring rechteckigen Querschnitt haben. Infolge der Reibung an der Berührfläche zwischen dem Werkzeug und dem Ring wird beim Verstellen des Ringes mittels der radial angeordneten Schrauben auch das Werkzeug radial verstellt. Eine derartige Aufnahme ist vorzugsweise dort anzuwenden, wo die Spannmutter schon mit Einrichtungen zur Verminderung des Radialschlages versehen ist. Wo das nicht der Fall ist, kann die Aufgabe mit dem kennzeichnenden Merkmal des Anspruchs 2 gelöst werden. Um den Ring in seiner Ausgangslage einfach zentrieren zu können, wird die Erfindung mit dem kennzeichnenden Merkmal des Anspruchs 3 weitergebildet. Eine von der Reibung unabhängige Verstellung des Werkzeuges wird erreicht, wenn der Ring auf oder in dem Werkzeug zentriert wird, wie das in verschiedenen Lösungen nach den kennzeichnenden Merkmalen der Ansprüche 4 bis 7 möglich ist. Eine sehr zweckmäßige Zentrierung läßt sich auch mit einem in mehrere Segmente unterteilten Ring erreichen (Anspruch 8).

Die Erfindung wird nachstehend anhand der Figuren 1 bis 7 beschrieben.

Figur 1 zeigt eine Werkzeugaufnahme nach der Erfindung;

Figur 2 zeigt eine andere Ausführung einer Werkzeugaufnahme nach der Erfindung;

Figuren 3, 4 und 5 zeigen Varianten des radial einstellbaren Elementes im Längsschnitt;

Figuren 6 und 7 zeigen eine weitere Variante im Längs- und im Querschnitt.

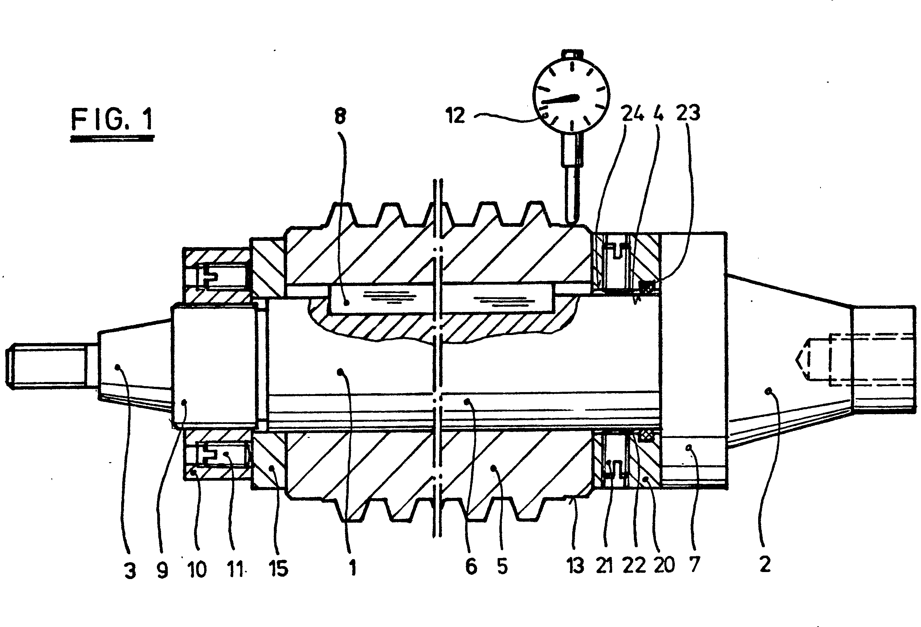

Ein Spanndorn 1, der bei dem in Figur 1 gezeigten Beispiel keine axial durchgehende Bohrung aufweist, ist an einem Ende mit einem ersten Konus 2 zur Aufnahme in einer nicht gezeichneten Werkzeugmaschinenspindel versehen. Zwischen einem einen Wälzfräser 5 aufnehmenden zylinderischen Teil 6 des Spanndornes und dem besagten ersten Konus ist ein Bund 7 vorgesehen. Der Wälzfräser ist mit einer Paßfeder 8 gegen Verdrehen auf dem Spanndorn gesichert. Am anderen Ende ist der Spanndorn 1 mit einem zweiten Konus 3 versehen zur drehbaren Aufnahme in einem nicht gezeichneten Stützlager der Maschine. Auf die zum Spannen und zum Antreiben des Spanndornes erforderlichen Einrichtungen braucht hier nicht eingegangen zu werden, da sie für die Erfindung ohne Bedeutung sind.

Auf dem Spanndorn 1 ist zwischen dem zylinderischen Teil 6 und dem zweiten Konus 3 ein Gewinde 9 vorgesehen für eine Spannmutter 10, die über eine oder mehrere Scheiben 15 am Wälzfräser 5 anliegt. Die Mutter ist mit mehreren, beispielsweise sechs, gleichmäßig auf einem Lochkreis verteilten Spannschrauben 11 versehen, die exzentrisch und axial auf den Wälzfräser 5 einwirken können. Auf der anderen Seite ist zwischen dem Wälzfräser 5 und dem Bund 7 ein Einstellring 20 vorgesehen. Sein Innendurchmesser 24 ist geringfügig, d.h. wenige Zehntelmillimeter größer als der Außendurchmesser 4 des zylinderischen Teiles 6. Die beiden Seitenflächen des Einstellringes 20 liegen am Fräser 5 und am Bund 7 an. Der Einstellring ist mit mehreren, beispielsweise 4 oder 6, gleichmäßig auf seinem Umfang verteilten Gewindebohrungen versehen. In dieses Gewinde sind Stellschrauben 21 eingeschraubt, die — den radialen Abstand 22 zwischen dem Einstellring 20 und dem zylinderischen Teil 6 des Spanndornes 1 überbrückend — am Spanndorn anstehen.

Das Einstellen des Wälzfräsers geht folgendermaßen vor sich. Der Fräser 5 wird auf den Spanndorn 1 aufgesteckt, bis er über den Einstellring 20 am Bund 7 anliegt. Die Spannmutter 10 wird aufgeschraubt, bis sie fest gegen den Fräser 5 anliegt. Dadurch, daß die Stirnseiten des Fräsers oder die Stirnseiten der Spannmutter einen Schlag haben können, und dadurch, daß die Gewinde von Dorn und Mutter Spiel haben, und sich die Mutter in der Größenordnung dieses Spiels radial verschieben und sich infolge des Flankenwinkels der Gewinde verkanten kann, legt sich die Mutter einseitig gegen den Fräser an. Durch die ungleiche Anlage der Mutter werden die Fasern des Spanndornes auf der einen Seite der neutralen Faser stärker gedehnt als auf der anderen, was sich als Schlag des Fräsers auswirkt. Das Messen des Schlages kann mit einer Meßuhr 12 oder dergleichen an beiderseits am Fräser befindlichen Kontrollsitzen 13 erfolgen. Durch entsprechendes Anziehen einer oder mehrerer Spannschrauben 11 kann der Schlag weitgehend beseitigt werden, weil dadurch auch die Fasern des Spanndornes auf der anderen Seite der neutralen Faser gedehnt werden. Es ist aber nicht auszuschließen, daß der Fräser wegen der Passungstoleranzen schief auf dem Spanndorn sitzt in der Art, daß auf der Seite der Spannmutter kein meßbarer Schlag mehr vorhanden ist, wohl aber auf der dem Bund zugewendeten Seite. Dieser Schlag kann mit dem Einstellring 20 beseitigt werden. Wenn man annimmt, daß die rechte untere Kante des Fräsers 5 den größten Meßuhrausschlag bringt, dann wird die gegenüberliegende Stellschraube 21, also die obere, weiter eingeschraubt unter gleichzeitigem entsprechendem Herausdrehen der unteren, im Bereich des größten Meßuhrausschlages liegenden, Stellschraube 21. Dadurch wird der Einstellring 20 nach oben gedrückt und nimmt über die Reibung an seiner Anlagefläche den Fräser 5 mit. Dieses Einstellen des Fräsers in eine schlagfreie Position geschieht zweckmäßigerweise durch abwechselndes schrittweises Anziehen der Spannmutter 10 und Anziehen bzw. Lösen der Spannschrauben 11 und Stellschrauben 21.

Damit sich der Einstellring 20 zu Beginn des Einstellvorganges in einer zentrischen Stellung gegenüber dem Spanndorn 5 befindet und nicht in seiner Bohrung 24 auf dem zylinderischen Teil 6 aufliegt, ist er über einen elastischen Ring 23 auf dem Spanndorn zentriert. Dieser elastische Ring ist im Ausführungsbeispiel ein in einer Ringnut gehaltener O-Ring, der der ihm beim Einstellen vom Einstellring aufgezwungenen Verformung ohne weiteres standhält.

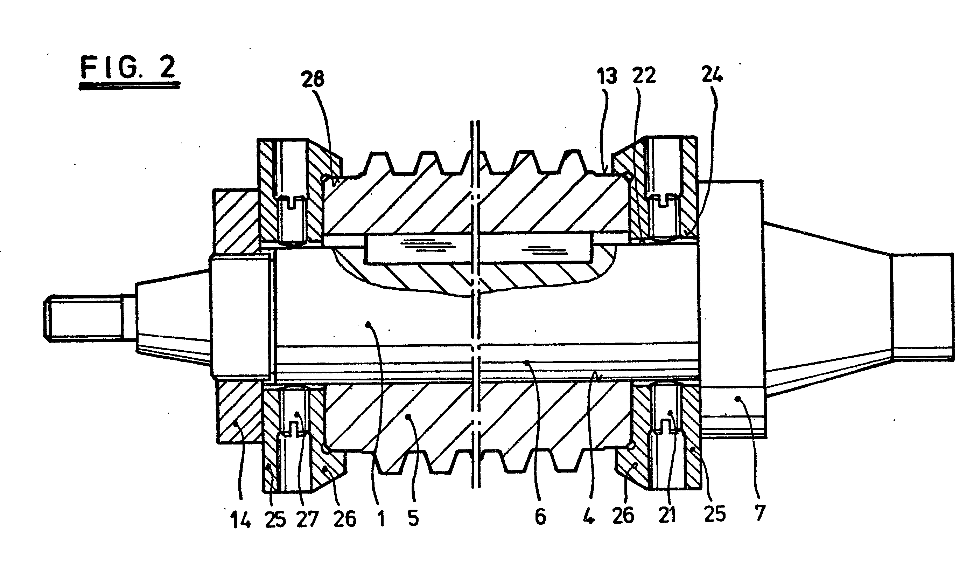

Wenn statt der mit Spannschrauben versehenen Spannmutter 10 eine normale Mutter 14 verwendet wird, empfiehlt sich der Einbau von zwei Einstellringen, zu jeder Seite des Fräsers einer. Bei dem in Figur 2 gezeigten Ausführungsbeispiel ist eine andere Art Einstellring dargestellt, der ebensogut beim Beispiel nach Figur 1 verwendet werden kann wie der dort gezeigte beim Beispiel nach Figur 2. Die Einstellringe sind mit 25 bezeichnet. Ihr Innendurchmesser ist wieder geringfügig größer als der Außendurchmesser des Spanndornes. Ein elastischer Ring ist nicht erforderlich, da die Einstellringe über die Innendurchmesser 28 von ringförmigen Ansätzen 26 auf dem Kontrollsitz 13 des Fräsers zentriert sind. Zum schlagfreien Einstellen des Fräsers sind in den Einstellringen 25 mehrere Stellschrauben 27 vorgesehen, die entsprechend angezogen und gelöst werden. Dabei wird die Lage des Fräsers gegenüber dem Dorn über die Ansätze 26 mit verändert. Diese Lösung hat den Vorteil, unabhängig von der Reibung zu sein.

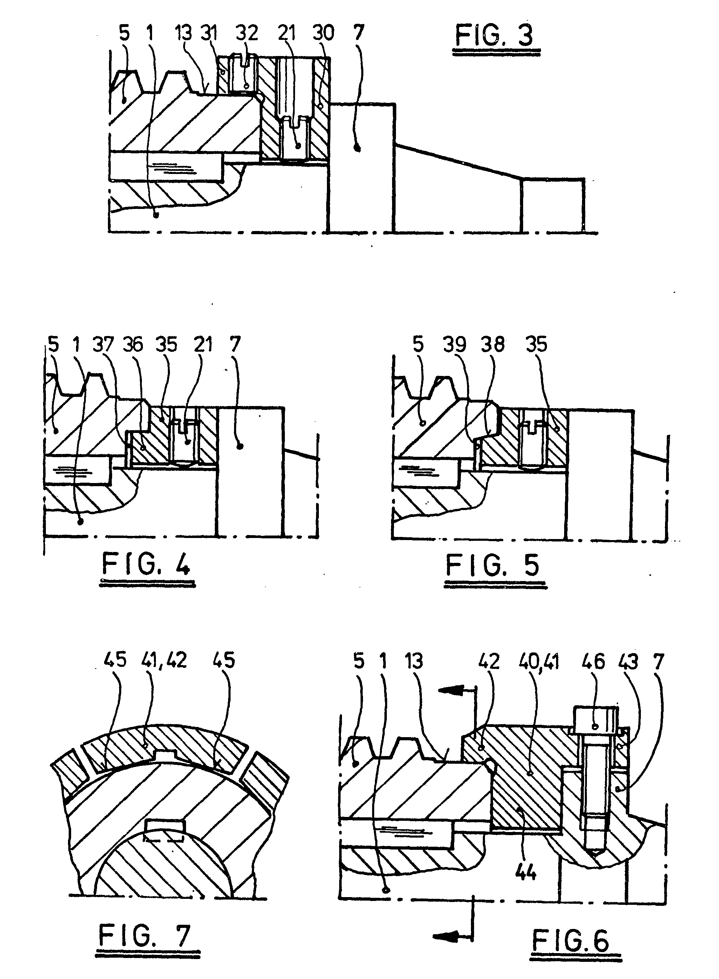

Eine Variante zum Einstellring 25 ist in Figur 3 mit dem Einstellring 30 dargestellt. Eine spielfreie Zentrierung über den Ansatz 26 auf dem Kontrollsitz 13 erschwert den Zusammenbau und — mehr noch — den Ausbau des Fräsers. Der Einstellring 30 ist deshalb über einen ringförmigen Ansatz 31 nur vorzentriert. Zusätzlich zu den Stellschrauben 21 sind im Bereich des Ansatzes 31 noch Klemmschrauben 32 vorgesehen, mit denen der Einstellring auf dem Kontrollsitz 13 oder auf einem zusätzlichen Bund festgeklemmt wird.

Statt der Zentrierung des Einstellringes außen auf dem Kontrollsitz 13 ist auch eine Innenzentrierung möglich. In Figur 4 ist der Einstellring mit 35 bezeichnet. Mit einem ringförmigen, zylinderisch begrenzten Ansatz 36 ist er in einer entsprechenden Ausnehmung 37 im Fräser 5 zentriert. Der Ansatz kann auch eine kegelige Mantelfläche 38 haben (Fig. 5) und in eine entsprechend geformte Ausnehmung 39 des Werkzeugs eingreifen.

Ein weiteres Ausführungsbeispiel ist in Figur 6 und 7 gezeigt. Ein Ring 40 mit etwa T-förmigem Profil ist in mehrere, vorzugsweise 4 oder 6, Segmente 41 unterteilt. Die den beiden Armen des T entsprechenden Abschnitte 42, 43 greifen zumindest teilweise über den Kontrollsitz 13 des Fräsers 5 und über den Bund 7, der dem Stamm des T entsprechende Abschnitt 44 liegt wie bei den vorher beschriebenen Einstellringen seitlich am Bund 7 und am Fräser 5 an. Der Abschnitt 42 liegt über zwei zueinander geneigte ebene Druckflächen 45 auf dem Kontrollsitz 13 auf. Zum radialen Verstellen der Segmente 41 und gleichzeitig zum Halten dienen Stellschrauben 46, die mit ihrem Kopf auf dem Abschnitt 43 aufliegen und im Bund 7 eingeschraubt sind. Das Einstellen des Fräsers 5 erfolgt durch entsprechendes Lösen bzw. Nachziehen der Schrauben 46, aber im umgekehrten Sinne wie bei den Einstellringen. Wenn man analog zur Figur 1 annimmt, daß wieder die rechte untere Kante des Fräsers 5 den größten Meßuhrausschlag bringt, dann wird die gegenüberliegende Stellschraube 46 gelöst und die untere, im Bereich des größten Meßuhrausschlages liegende, in Figur 6 nicht gezeigte Stellschraube nachgezogen, wobei das Segment dem Spanndorn genähert und über die Druckflächen der Fräser mitgenommen wird, bis das obere Segment wieder am Schraubenkopf anliegt. Dieser Vorgang muß — wie auch bei den Einstellringen 20, 25, 30, 35 — u.U. bei verschiedenen einander gegenüberliegenden Stellschrauben durchgeführt oder auch mehrmals wiederholt werden, bis der Fräser schlagfrei ist.

Die Stellschrauben 21, 46 können handelsübliche Schrauben sein. Für ein feinfühliges Einstellen sind aber Schrauben mit Feingewinde vorteilhafter. Wichtig ist noch, daß die Schrauben nach dem Einstellen des Werkzeugs eingeschraubt bleiben, um eine Verstellung des Werkzeugs unter dem Schnittdruck zu vermeiden.

### Patentansprüche

1. Werkzeugaufnahme, insbesondere für das Werkzeug (Fräser) (5) einer Wälzfräsmaschine, mit einem Spanndorn (1), der an beiden Enden jeweils zum Zentrieren und Spannen in der Werkzeugmaschinenspindel und in einem Stützlager in geeigneter Weise ausgebildet, z.B. mit Konen (2, 3) versehen ist, und der zum axialen Spannen des Werkzeugs (5) einen Bund (7) auf der einen Seite des Werkzeugs (5) und eine Spannmutter (10) auf der anderen Seite des Werkzeugs (1) aufweist, dadurch gekennzeichnet, daß zwischen dem Werkzeug (5) und dem Bund (7) ein Ring (20, 25, 30, 35, 40, 45) angeordnet ist, welcher den Spanndorn (1) mit radialem Abstand (22) umgibt und mehrere in einer einzigen gemeinsamen Radialebene radial angeordnete Schrauben (21) aufweist, die mit dem Spanndorn (1) zusammenwirken und welcher mit einer Stirnseite am Bund (7) und mit der gegenüberliegenden Stirnseite form- oder kraftschlüssig an dem Werkzeug (5) anliegt.

2. Werkzeugaufnahme nach Anspruch 1, dadurch gekennzeichnet, daß zwischen der Spannmutter (10) und dem Werkzeug (5) ein weiterer Ring (20) angeordnet ist, welcher den Spanndorn (1) mit radialem Abstand (22) umgibt und mehrere in einer einzigen Radialebene radial angeordnete Schrauben (21) aufweist, die mit dem Spanndorn (1) zusammenarbeiten, und welcher mit einer Stirnseite an der Spannmutter (10) und mit der gegenüberliegenden Stirnseite form- oder kraftschlüssig an dem Werkzeug (5) anliegt.

3. Werkzeugaufnahme nach Anspruch 1 oder 2, dadurch gekennzeichnet, daß der radiale Abstand (22) zwischen dem Spanndorn (1) und dem Ring (20) bzw. den Ringen (20) von einem elastischen Ring (23) bzw. von elastischen Ringen (23) überbrückt wird.

4. Werkzeugaufnahme nach Anspruch 1 oder 2, dadurch gekennzeichnet, daß der Ring (25) bzw. die Ringe (25) innen einfach gestuft ist bzw. sind und einen ersten, den Spanndorn (1) in diesem Bereich mit radialem Abstand (22) umgebenden Innendurchmesser (24) und einen zweiten, einen Ansatz (13) am Werkzeug (5) spielfrei umgreifenden Inndurchmesser (28) aufweist bzw. aufweisen und in dem bzw. denen die in einer einzigen gemeinsamen Radialebene radial angeordneten Schrauben (21) im Bereich mit dem ersten Innendurchmesser (24) vorgesehen sind.

5. Werkzeugaufnahme nach Anspruch 4, dadurch gekennzeichnet, daß der Ring (30) bzw. die Ringe (30) in dem Bereich mit dem zweiten Innendurchmesser (28) in einer einzigen gemeinsamen Radialebene radial angeordnete Schrauben (32) aufweist bzw. aufwersen, die mit dem Ansatz (13) am Werkzeug (5) zusammenwirken.

6. Werkzeugaufnahme nach Anspruch 1 oder 2, dadurch gekennzeichnet, daß der Ring (35) bzw. die Ringe (35) außen abgesetzt ist bzw. sind und mit einem so gebildeten ringförmigen Ansatz (36) spielfrei in eine entsprechende Ausnehmung (37) des Werkzeugs (5) eingreift bzw. eingreifen.

7. Werkzeugaufnahme nach Anspruch 6, dadurch gekennzeichnet, daß der Ansatz (36) eine konische Mantelfläche (38) aufweist und in eine entsprechende Ausnehmung (39) des Werkzeugs (5) eingreift.

8. Werkzeugaufnahme nach Anspruch 1 oder 2, dadurch gekennzeichnet, daß der Ring (40) bzw. die Ringe (40) je einen den Bund (7) und einen Zentrieransatz (13) am Werkzeug (5) umgreifenden ringförmigen Ansatz (42, 43) aufweist bzw. aufweisen und der bzw. die in 4 oder mehr Segmente (41) unterteilt ist bzw. sind, die von den den Bund (7) umgreifenden Ansatz (43) durchdringenden, in den Bund (7) eingebrachten Schrauben (46) gehalten werden und sich über jeweils zwei schräg zueinander angeordnete ebene Flächen (45) auf dem Zentrieransatz (13) abstützen.

## Claims

1. A tool holder, especially for the tool (hob) (5) of a hobbing machine, with an arbor (1) which at its two ends is suitably designed, e.g. provided with tapers (2, 3), for centring and clamping such arbor between the spindle of the machine tool and an arbor support bearing, and which, for axially clamping the tool (5), has a collar (7) on one side of the tool (5) and a clamping nut (10) on the other side of such tool (5), comprising a ring (20, 25, 30, 35, 40, 45) provided between the tool (5) and the collar (7), which ring surrounds the arbor (1) at a radial distance (22) therefrom and has several screws (21) arranged radially in a single, common radial plane and cooperating with the arbor (1), such ring with its one face side abutting the collar (7) and with its opposite face side being in positive-locking or frictional engagement with the tool (5).

2. A tool holder as claimed in claim 1 wherein a further ring (20) is provided between the clamping nut (10) and the tool (5), which ring surrounds the arbor (1) at a radial distance (22) therefrom and has several screws (21) arranged radially in a single, common radial plane and cooperating with the arbor (1), such ring with its one face side abutting the clamping nut (10) and with its opposite face side being in positive-locking or frictional engagement with the tool (5).

3. A tool holder as claimed in claim 1 or claim 2 wherein the radial distance (22) between the arbor (1) and the ring or rings (20) is taken up by an elastic ring (23) or elastic rings (23).

4. A tool holder as claimed in claim 1 or claim 2 wherein the ring or rings (25) has/have a single step on the inside and is/are provided with a first inside diameter (24) surrounding the arbor in this region at a radial distance (22) therefrom, and a second inside diameter (28) surrounding an extension (13) of the tool (5) without any radial clearance, such ring or rings being provided with screws (21) arranged radially in a single, common radial plane in the region of said first inside diameter (24).

5. A tool holder as claimed in claim 4 wherein the ring or rings (30), in the region of the second inside diameter (28), is/are provided with screws (32) arranged radially in a single, common radial plane and cooperating with the extension (13) of the tool (5).

6. A tool holder as claimed in claim 1 or claim 2 wherein the ring or rings (35) is/are stepped externally and, with the annular extension (36) thus formed, engage(s) a corresponding recess (37) in the tool (5) without any radial clearance.

7. A tool holder as claimed in claim 6 wherein the extension (36) is provided with a tapered external surface (38) engaging a corresponding recess (39) in the tool (5).

8. A tool holder as claimed in claim 1 or claim 2 wherein the ring or rings (40) is/are provided with annular extensions (42, 43), one surrounding the collar (7), the other surrounding a centring extension (13) of the tool (5), such ring or rings being subdivided into four or more segments (41) which are held by screws (46) passing through the annular extension (43), which surrounds the collar (7), and extending into such collar (7), such segments resting against the centring extension (13) on two plane surfaces (45) arranged in mutually angular configuration.

## Revendications

1. Porte-outil notamment pour l'outil (5) (fraise-mère) d'une machine à fraiser par développante, comprenant un mandrin de serrage (1), qui, à ses deux extrémités, est constitué d'une manière appropriée pour le centrage et le blocage dans la broche de la machine-outil et pour son support dans un palier d'appui, mandrin pourvu, par exemple, de parties coniques (2, 3) et qui présente, en vue du blocage axial de l'outil (5), une bride (7) sur l'un des côtés de l'outil, et un écrou de blocage (10) sur l'autre côté de l'outil, caractérisé en ce que, entre l'outil (5) et la bride (7) est disposée une bague (20, 25, 30, 35, 40, 45) qui entoure le mandrin (1) à espacement radial (22) et qui présente plusieurs vis (21), disposées radialement dans un seul plan radial commun, qui coopèrent avec le mandrin (1), la dite bague s'appuyant avec une face frontale, contre la bride (7), et, avec la face frontale opposée, contre l'outil (5) par engagement de forme ou blocage de transmission de force.

2. Porte-outil suivant la revendication 1, caractérisé en ce que, entre l'écrou de blocage (10) et l'outil (5), est disposée une autre bague (20) qui entoure le mandrin (1) à espacement radial (22) et qui présente plusieurs vis (21), disposées radialement dans un seul plan radial commun, qui coopèrent avec la mandrin (1), ladite bague s'appuyant, avec une face frontale, contre l'écrou de blocage (10) et, avec la face frontale opposée, contre l'outil (5) par engagement de forme ou blocage de transmission de force.

3. Porte-outil suivant l'une des revendications 1 ou 2, caractérisé en ce que l'espacement radial (22) entre le mandrin (1) et la ou les bagues (20) est comblé par un, ou par des anneaux élastiques (23).

4. Porte-outil suivant l'une des revendications 1 ou 2, caractérisé en ce que la, ou les bagues (25) présentent, à l'intérieur, un épaulement unique, et présentent ainsi un premier diamètre intérieur (24) entourant le mandrin (1) dans cette zone avec un espacement radial (22), et un second diamètre intérieur (28) engagé sans jeu autour d'un épaulement (23) formé sur l'outil, les vis (21) disposées dans un même plan radial commun étant prévues dans la zone comportant le premier diamètre intérieur (24).

5. Porte-outil suivant la revendication 4, caractérisé en ce que la, ou les bagues (30) présentent, dans le domaine comportant le second diamètre intérieur (28), des vis, disposées dans un même plan radial commun, qui coopèrant avec un épaulement (13) de l'outil (5).

6. Porte-outil suivant l'une des revendications 1 ou 2, caractérisé en ce que la bague, ou les bagues (35) présentent un décrochement vers l'extérieur et elles sont engagées, avec un épaulement annulaire ainsi formé, dans un évidement correspondant (37) de l'outil (5).

7. Porte-outil suivant la revendication 6, caractérisé en ce que l'épaulement (36) présente une surface enveloppe conique, qui est engagée dans un évidement (39) de forme conique correspondante de l'outil (5).

8. Porte-outil suivant l'une des revendications 1 ou 2, caractérisé en ce que la bague (40) ou les bagues (40) présentent chacune un appendice de forme annulaire (42, 43) qui est engagé autour de la bride (7) et d'un épaulement de centrage (13) prévu sur l'outil (5) et qui est partagé en quatre segments ou davantage (41) qui sont traversés par l'appendice (43) entourant la bride (7), qui sont maintenus par des vis (46) engagées dans la bride (7) et qui s'appuient chacun sur l'épaulement de centrage (13) de l'outil, par deux surfaces planes disposées obliquement l'une par rapport à l'autre (45).

FIG. 1

0 020 864

FIG. 2

0020 864

FIG. 3

FIG. 4

FIG. 5

FIG. 7

FIG. 6